# EUROPEAN PATENT SPECIFICATION

(11) **EP 4 253 161 B1**
(45) Date of publication and mention of the grant of the patent: **06.05.2026**
(21) Application number: 22164672.2
(22) Date of filing: 28.03.2022
(51) Int. Cl.: B60R 19/18

(54) **A SUPPORTING STRUCTURE FOR A CLADDING COMPONENT OF A VEHICLE, A CLADDING COMPONENT OF A VEHICLE AND VEHICLE COMPRISING SUCH A CLADDING COMPONENT**
TRAGSTRUKTUR FÜR EIN VERKLEIDUNGSBAUTEIL EINES FAHRZEUGES, VERKLEIDUNGSBAUTEIL EINES FAHRZEUGS UND FAHRZEUG MIT EINEM SOLCHEN VERKLEIDUNGSBAUTEIL
STRUCTURE DE SUPPORT POUR UN COMPOSANT DE REVÊTEMENT D'UN VÉHICULE, COMPOSANT DE REVÊTEMENT D'UN VÉHICULE ET VÉHICULE COMPRENANT UN TEL COMPOSANT DE REVÊTEMENT

(43) Date of publication of application: 04.10.2023
(73) Proprietor: Motherson Innovations Company Limited, London E14 5HU (GB)
(72) Inventor: Sepp, Benjamin, 77723 Gengenbach (DE); Rinderlin, Jürgen, 79211 Denzlingen (DE)
(74) Representative: Westphal, Mussgnug & Partner Patentanwälte mbB

(56) References cited:
- EP-A1- 1 475 268
- DE-A1- 102010 049 818
- DE-A1- 19 604 213
- DE-A1- 2 708 856
- FR-A1- 2 762 563
- US-A1- 2009 027 181
- US-B1- 6 416 094

## Description

The present disclosure relates to a supporting structure for a cladding component of a vehicle and relates to a cladding component of a vehicle comprising such a supporting structure. Moreover, the present disclosure relates to a vehicle comprising such a cladding component.

Modern vehicles are equipped with a number of devices or systems which enhance the vehicle maneuver. These devices or systems may include lighting systems, driver assistance systems, communication systems, monitoring systems, air flow systems, energy absorbers or any other functional devices or systems. Such systems and devices may include a number of components such as sensors, lighting module, cameras, electrical and electronic circuitries. Some of these components may be located inside of the vehicle. However, due to the design reasons some of the components such as sensors, lighting module, cameras may be located within the cladding component of the vehicle. These components are exposed to the outside environment such as humidity, dirt, mud, electromagnetic radiations and other external influences and are thus prone to get damaged or malfunctioned. Therefore, there is a need to protect such components from humidity, dirt, mud, electromagnetic radiations and other external influences for proper functioning.

The cladding component of the vehicle becomes heavier due to the location of the components such as sensors, lighting modules, cameras on the cladding component. Thus, a much higher structural stiffness of the current cladding component is required, which leads to heavier and more complex design of the cladding component. Thus, there is a need to reduce the weight of the cladding component without compromising its stiffness and strength.

Some of the cladding component designs are disclosed in FR 2 998 524, EP 3 661 812 A1, US 4623182 A, DE 195 45 069 B4 and JP 6233483. DE 27 08 856 A1, FR 2 762 563 A1, US 6 416 094 B1, EP 1 475 268 A1 and DE 196 04 213 A1 are mentioned as further prior art documents.

In almost all of the existing cladding components designs a solution for optimizing the design of the cladding component is described. However, none of the prior arts discloses any ways to reduce the weight of the cladding component without compromising its stiffness and strength of the cladding component. Also, none of the prior arts discloses protecting the fragile components such as sensors, lighting modules which may be located on the cladding component.

Thus, there is a need to protect fragile components such as sensors, lighting modules from humidity, dirt, mud, electromagnetic radiations and other external influences for proper functioning. Also, there is a need to reduce the weight of the cladding component without compromising its stiffness and strength.

It is one task of one embodiment of the present disclosure to present an assembly comprising a supporting structure and a cladding component of a vehicle by which the above described drawbacks can be eliminated or at least reduced and the performance of the cladding component be improved.

The task is solved by the features specified in claims 1 and 12.

According to the invention, an assembly comprising a supporting structure and a cladding component of a vehicle comprises:
- a body attached to rear of the cladding component of the vehicle forming a cavity between the supporting structure and the cladding component of the vehicle;
- at least one cladding component fastening module for fastening the supporting structure with the cladding component of the vehicle; and
- at least one vehicle fastening module for fastening the supporting structure with the vehicle,
wherein the supporting structure comprises at least one attachment mounting part for mounting at least one attachment to the supporting structure.

According to the present invention, at least one attachment is mounted within the cavity and comprises at least one of a sensor, a lighting module, electromagnetic shielding module, drying unit, antenna and a combination thereof. The cladding component is a screen made of plastic, wherein the cladding component is a front bumper or a rear bumper of the vehicle and the supporting structure acts as a carrier body between the cladding component and the vehicle body.

The attachment aids the driver of the vehicle for safe vehicle operation. The attachment is mounted within the cavity formed between the supporting structure and the cladding component. This way, the attachment is safe from external influences such as dirt, dust, mud, humidity and electromagnetic effects.

Hence, the attachment is prevented from malfunctioning and thus have increased operating life.

Conventionally the cladding components such as front or rear bumpers are directly mounted to vehicle body. A number of components such as sensors, lighting modules and cameras are mounted directly on the cladding components. This makes the cladding components heavier, and thus cladding components are prone to damage or breakage due to heavy weight.

The supporting structure according to the present disclosure is attached to the cladding component of the vehicle such that the supporting structure provides support to the cladding component. The at least one attachment is mounted on the supporting structure. The cladding component of the present disclosure is free from additional weight of the attachments. Thus, the cladding component of the present disclosure is light in weight. Since the attachments are not mounted on the cladding component, design of the cladding component of the present disclosure becomes simpler, and hence the cladding component is cost effective.

The body of the supporting structure forms a cavity with the cladding component such that the at least one attachment is secured within the cavity formed between the body of the supporting structure and the cladding component. The advantage of mounting the at least one attachment within the cavity is that the at least one attachment is safe from external influences such as dirt, dust, mud, humidity and electromagnetic effects. Hence, the at least one attachment is prevented from malfunctioning and thus have increased operating life.

According to the invention, the at least one attachment mounting part is located within the cavity. The at least one attachment mounting part may be partially open or completely closed. If the at least one attachment mounting part is partially open, the at least one attachment is fastened from either front or rear of the supporting structure. If the at least one attachment mounting part is closed, the at least one attachment is fastened only from the front of the supporting structure.

In an embodiment, the cavity may be completely closed or partially open. Completely closed cavity may provide better protection of the at least one attachment from the external influences. However, partially open cavity may be useful in replacement of the at least one attachment when required. Furthermore, connection to the power supply or the control unit of the vehicle is easier in case of partially open cavity.

In an embodiment, the at least one cladding component fastening module comprises at least one of clips, screws, gluing, welding and combination thereof. The at least one cladding component fastening module keeps the cladding component and the supporting structure intact.

In an embodiment, the at least one vehicle fastening module comprises clips and/or channels. The at least one vehicle fastening module keeps the supporting structure intact with the vehicle body.

In an embodiment, the supporting structure is made of thermoplastic material and/or fiber composite. The advantage of using these materials is that they provide rigidity to the supporting structure. They are also light in weight. Thus, the supporting structure is rigid and light in weight.

In an embodiment, the supporting structure is made in one-piece or multi-piece depending on the design requirement.

In an embodiment, the supporting structure further comprises add-on elements such as ribs, crash elements, hooks, latches, openings and/or screw bosses. These elements provide additional functionality to the supporting structure.

In an embodiment, the supporting structure further comprises airflow system, lower stiffener for pedestrian protection, energy absorber for hip impact, RCAR barrier and/or pendulum impact. These systems may be added to the supporting structure for further enhancing its functions.

A further embodiment of the present disclosure is directed to a vehicle comprising a cladding component according to one of the preceding embodiments supported by a supporting structure according to one of the preceding embodiments.

The present disclosure is described in detail with reference to the drawings attached wherein
- Figures 1a and 1b: illustrate a perspective view of a supporting structure for a cladding component of a vehicle according to an embodiment of the present disclosure,
- Figure 2: is a perspective view of the supporting structure and the cladding component when disassembled, according to an embodiment of the present disclosure,
- Figure 3a and 3b: are perspective views of the supporting structure and the cladding component when assembled, according to an embodiment of the present disclosure,
- Figure 4: is a sectional view of the supporting structure and the cladding component when assembled, according to an embodiment of the present disclosure,
- Figure 5: is a perspective view of the supporting structure illustrating at least one vehicle fastening module, according to an embodiment of the present disclosure,
- Figure 6: is a front view of the supporting structure, according to an embodiment of the present disclosure,
- Figure 7: is a front view of the supporting structure, according to an embodiment of the present disclosure,
- Figure 8: is a rear view of the supporting structure and the cladding component when assembled, according to an embodiment of the present disclosure,
- Figure 9: is a front view of the cladding component, according to an embodiment of the present disclosure, and
- Figure 10: is side view of a vehicle according to an embodiment of the present disclosure.

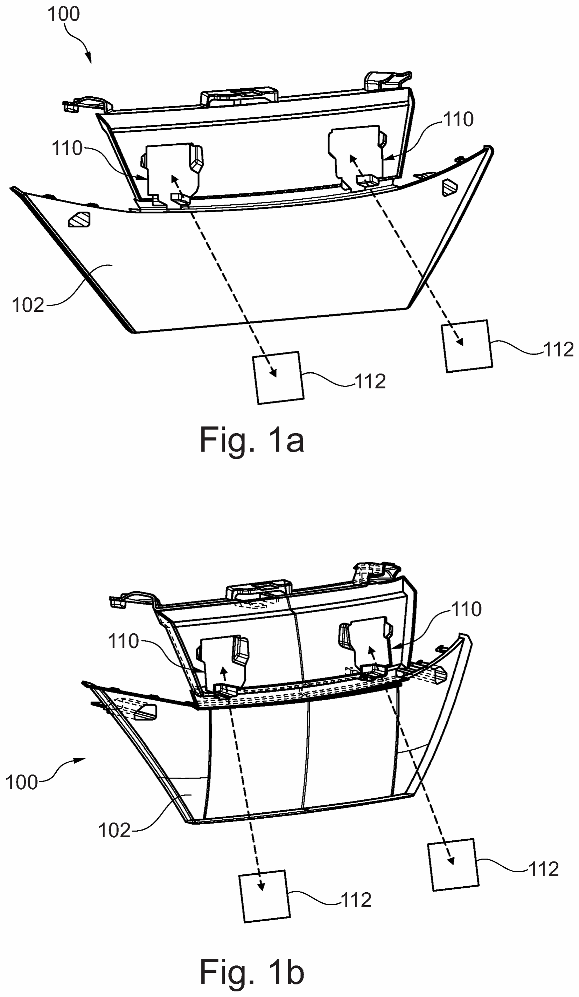

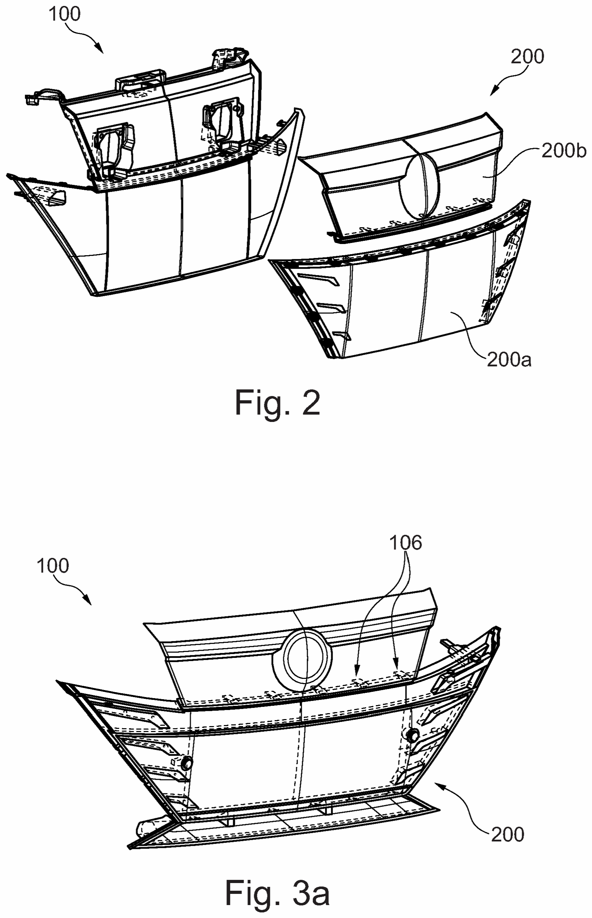

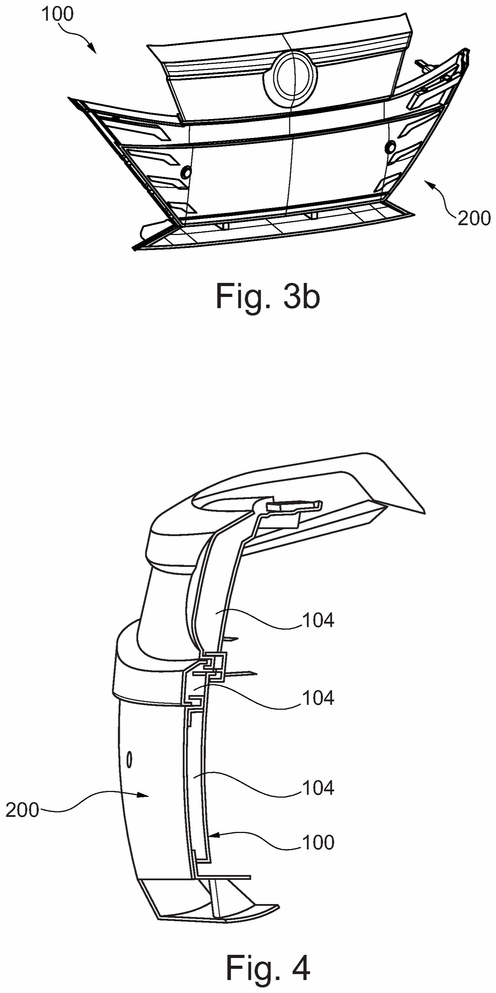

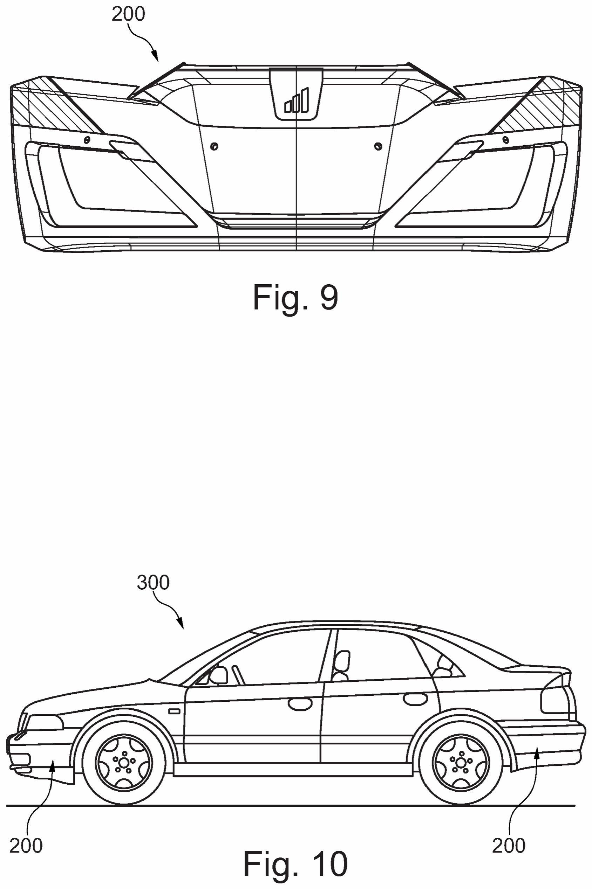

Figure 1a and 1b illustrate a perspective view of a supporting structure 100 for a cladding component 200 (shown in Figures 2-4 and 8-10) of a vehicle 300 (shown in Fig. 10). The supporting structure 100 comprises a body 102. The body 102 of the supporting structure 100 is designed and shaped in the form of a shell such that the supporting structure 100 forms a cavity 104 (shown in Figure 4) with the cladding component 200 when the supporting structure 100 is fastened to the cladding component 200. The supporting structure 100 is fastened to the cladding component 200 from rear side of the cladding component 200. Thus, the supporting structure 100 is not visible from the outside of the vehicle 300. The supporting structure 100 acts as a carrier body between the cladding component 100 and the vehicle body. The supporting structure 100 may be made of thermoplastic material. In another embodiment, the supporting structure 100 may be made of fibre composite material. The advantage of using these materials for supporting structure 100 is that they provide rigidity to the supporting structure 100. They are also light in weight. Thus, the supporting structure 100 is rigid and light in weight. Further, the supporting structure 100 may be made in one piece or multi piece based on the requirement.

Further, the supporting structure 100 comprises at least one attachment mounting part 110 for mounting at least one attachment 112 to the supporting structure 100. The at least one attachment mounting part 110 is located inside of the cavity 104 formed between the supporting structure 100 and the cladding component 200. The at least one attachment mounting part 110 may be completely closed or partially open. In the illustrated embodiment, the at least one attachment mounting part 110 is partially open. If the at least one attachment mounting part 110 is partially open, the at least one attachment 112 is fastened from either front or rear of the supporting structure 100. If the at least one attachment mounting part 110 is closed, the at least one attachment 112 is fastened from the front of the supporting structure 100.

Figure 2 illustrates a perspective view of the supporting structure 100 and the cladding component 200 when disassembled. The whole cladding component 200 is not shown and only portions 200a and 200b of the cladding component 200 are shown in Figure 2 for illustrative purpose.

Figures 3a and 3b illustrate assembled views of the supporting structure 100 and the cladding component 200. As shown in Figures 3a and 3b, the supporting structure 100 is fastened to the cladding component 200 by using at least one cladding component fastening module 106. The at least one cladding component fastening module 106 comprises at least one of clips, screws, gluing, welding and combination thereof.

Figure 4 illustrates a sectional view of the supporting structure 100 and the cladding component 200 when assembled together. As shown in Figure 4, a cavity 104 is formed between the supporting structure 100 and the cladding component 200. The cavity 104 is configured to secure at least one attachment 112. The at least one attachment 112 comprises at least one of a sensor, a lighting module, electromagnetic shielding module, drying unit, antenna, plastic elements for mounting electronic circuitries and a combination thereof. The at least one attachment 112 is secured within the cavity 104 and hence the at least one attachment 112 is protected from external influences such as dirt, dust, mud, humidity and electromagnetic effects. The cavity 104 may be completely closed or partially open. Completely closed cavity 104 may provide better protection of the at least one attachment 112 from the external influences. However, partially open cavity 104 may be useful in replacement of the at least one attachment 112 when required.

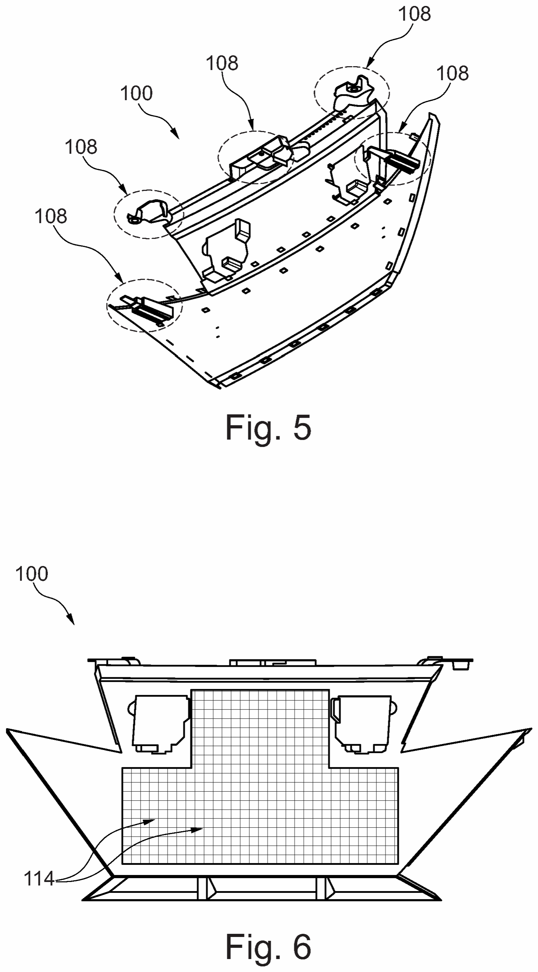

Figure 5 illustrates a perspective view of the supporting structure 100. The supporting structure 100 further comprises at least one vehicle fastening module 108. The at least one vehicle fastening module 108 is configured to fasten the supporting structure 100 to the vehicle 300. The at least one vehicle fastening module 108 comprises at least one of clips, channels, and combination thereof.

In an embodiment, the supporting structure 100 further comprises add-on elements 114. The add-on elements 114 comprise one of ribs, crash elements, hooks, latches, openings and screw bosses. The add-on elements 114 are additional elements for providing additional function to the supporting structure 100. For example, ribs may be provided for additional rigidity. The crash elements may be provided to the supporting structure 100 to withstand crashing thrust in case of an accident. The hooks may be provided to protect the connection between supporting structure 100 and cladding component 200. Further the hooks may provide additional protection against loosening of the at least one attachment 112 in the event of a crash. The latches may be provided to separate or protect the at least one attachment 112 from each other, therefore, closing elements may be used like claps, locks, etc. Thus, latches may allow opening and closing of the cavity 104 when required. The openings may be provided to for maintenance and replacement of the at least one attachment mounting part 110. The openings may also provide cooling due air flow. The screw bosses may be provided to better fixation of the screw into the supporting structure 100 and/or the cladding component 200. For illustrative purpose ribs are shown in Figure 6, which illustrates the arrangement of add-on elements. Other add-on elements are not shown in the figures.

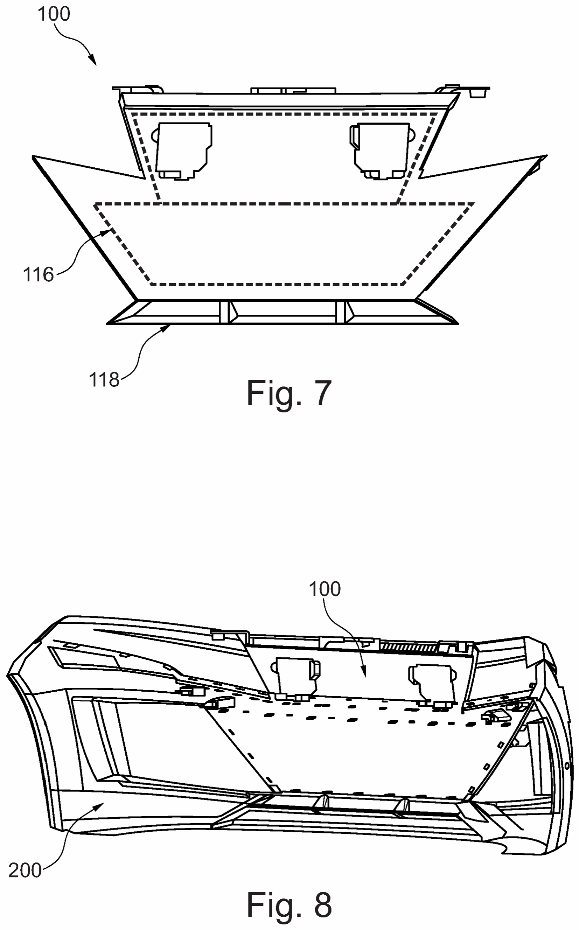

Figure 7 illustrates a front view of the supporting structure 100 according to an embodiment of the present disclosure. The supporting structure 100 further comprises an air flow system 118. In other embodiments (not shown), the supporting structure 100 further comprises lower stiffener for pedestrian protection, energy absorber for hip impact, RCAR barrier and/or pendulum impact. Figure 7 also illustrates a load line path 116 of the supporting structure 100. The load line path 116 is the path in the form of lines through which the load is transferred to the supporting structure 100. The load line path may be obtained by having a fiber composite reinforcement on the supporting structure 100. The advantage of having such a load line path is that the load may be absorbed in reinforced areas of the supporting structure 100, thus, the supporting structure is prevented from bending. Another advantage is that the load line path directs the load directly to the vehicle body and thus protecting the sensitive areas of the supporting structure 100.

Figure 8 illustrates a rear view of an assembly of the supporting structure 100 and the cladding component 200.

Figure 9 illustrates a front view of the cladding component 200 of a vehicle 300. The cladding component 200 is supported by the supporting structure 100 according to the embodiments previously described. The cladding component 200 may be a front bumper or a rear bumper of the vehicle 300. In the illustrated embodiment, the cladding component 200 is a front bumper. The cladding component 200 may also include a screen made of plastic. The screen may used for communication from the vehicle to pedestrian or other vehicles.

Figure 10 illustrates a side view of a vehicle 300 being equipped with a plurality of cladding components 200 supported by the supporting structure 100 according to one of the embodiments previously described.

### Reference list

- 100: supporting structure
- 102: body of supporting structure
- 104: cavity
- 106: at least one cladding component fastening module
- 108: at least one vehicle fastening module
- 110: at least one attachment mounting part
- 112: at least one attachment
- 114: add-on parts
- 116: load line path
- 118: air flow system
- 200: cladding component
- 200a and 200b: Portions of cladding component
- 300: vehicle

## Claims

1. Assembly comprising a supporting structure (100) and a cladding component (200) of a vehicle (300), the cladding component (200) being supported by the supporting structure (100), wherein the supporting structure (100) comprises:
- a body (102) attached to rear of the cladding component (200) of the vehicle (300) forming a cavity (104) between the supporting structure (100) and the cladding component (200) of the vehicle (300);
- at least one cladding component fastening module (106) for fastening the supporting structure (100) with the cladding component (200) of the vehicle (300); and
- at least one vehicle fastening module (108) for fastening the supporting structure (100) with the vehicle (300),
- wherein the supporting structure (100) comprises at least one attachment mounting part (110) for mounting at least one attachment (112) to the supporting structure (100),
**characterized in that** the at least one attachment (112)
- is mounted within the cavity (104) and
- comprises at least one of a sensor, a lighting module, electromagnetic shielding module, drying unit, antenna and a combination thereof,
- wherein the cladding component (200) is a screen made of plastic,
- wherein the cladding component (200) is a front bumper or a rear bumper of the vehicle (300),
- wherein the supporting structure (100) is designed and shaped in the form of a shell such that the supporting structure (100) forms the cavity (104) with the cladding component (200) when the supporting structure (100) is fastened to the cladding component (200) and acts as a carrier body between the cladding component (200) and the vehicle body, and
- wherein the supporting structure (100) is having a load line path (116) which is obtained by having a fiber composite reinforcement on the supporting structure (100).

2. Assembly as claimed in claim 1, wherein the at least one attachment mounting part (110) is located at inside of the cavity (104).

3. Assembly as claimed in claim 1, wherein the at least one attachment mounting part (110) is one of partially open or completely closed.

4. Assembly as claimed in claim 1, wherein the cavity (104) is configured to be completely closed or partially open.

5. Assembly as claimed in claim 1, wherein the at least one cladding component fastening module (106) comprises at least one of clips, screws, gluing, welding and combination thereof.

6. Assembly as claimed in claim 1, wherein the at least one vehicle fastening module (108) comprises clips and/or channels.

7. Assembly as claimed in claim 1, wherein the supporting structure (100) is made of thermoplastic material.

8. Assembly as claimed in claim 1, wherein the supporting structure (100) is made of fibre composite material.

9. Assembly as claimed in claim 1, wherein the supporting structure (100) is made in one-piece or multi-piece.

10. Assembly as claimed in claim 1, wherein the supporting structure (100) further comprises add-on elements (114) such as ribs, crash elements, hooks, latches, openings and/or screw bosses.

11. Assembly as claimed in claim 1, wherein the supporting structure (100) further comprises airflow system (118), lower stiffener for pedestrian protection, energy absorber for hip impact, RCAR barrier and/or pendulum impact.

12. A vehicle (300) comprising an assembly as claimed in one of the preceding claims, wherein the cladding component (200) is supported by a supporting structure (100).

## Patentansprüche

1. Baugruppe, die eine Tragstruktur (100) und ein Verkleidungsbauteil (200) eines Fahrzeugs (300) aufweist, wobei das Verkleidungsbauteil (200) von der Tragstruktur (100) getragen wird, wobei die Tragstruktur (100) aufweist:
- einen Körper (102), der an der Rückseite des Verkleidungsbauteils (200) des Fahrzeugs (300) angebracht ist und einen Hohlraum (104) zwischen der Tragstruktur (100) und dem Verkleidungsbauteil (200) des Fahrzeugs (300) bildet;
- zumindest ein Verkleidungsbauteil-Befestigungsmodul (106) zum Befestigen der Tragstruktur (100) an dem Verkleidungsbauteil (200) des Fahrzeugs (300); und
- zumindest ein Fahrzeug-Befestigungsmodul (108) zum Befestigen der Tragstruktur (100) an dem Fahrzeug (300),
- wobei die Tragstruktur (100) zumindest ein Befestigungsmontageteil (110) zum Montieren von zumindest einem Anbauteil (112) an der Tragstruktur (100) aufweist,
**dadurch gekennzeichnet, dass** das zumindest eine Anbauteil (112)
- innerhalb des Hohlraums (104) montiert ist und
- zumindest eines der folgenden Elemente aufweist: einen Sensor, ein Beleuchtungsmodul, ein elektromagnetisches Abschirmmodul, eine Trocknungseinheit, eine Antenne und eine Kombination davon,
- wobei das Verkleidungsbauteil (200) eine aus Kunststoff gefertigte Blende ist,
- wobei das Verkleidungsbauteil (200) eine Frontstoßstange oder eine Heckstoßstange des Fahrzeugs (300) ist,
- wobei die Tragstruktur (100) in der Form einer Schale so gestaltet und geformt ist, dass die Tragstruktur (100) mit dem Verkleidungsbauteil (200) den Hohlraum (104) bildet, wenn die Tragstruktur (100) an dem Verkleidungsbauteil (200) befestigt ist und als Trägerkörper zwischen dem Verkleidungsbauteil (200) und der Fahrzeugkarosserie fungiert, und
- wobei die Tragstruktur (100) einen Lastlinienpfad (116), der durch eine Faserverbundverstärkung an der Tragstruktur (100) erzielt wird, aufweist.

2. Baugruppe nach Anspruch 1, wobei sich das zumindest eine Befestigungsmontageteil (110) im Inneren des Hohlraums (104) befindet.

3. Baugruppe nach Anspruch 1, wobei das zumindest eine Befestigungsmontageteil (110) entweder teilweise offen oder vollständig geschlossen ist.

4. Baugruppe nach Anspruch 1, wobei der Hohlraum (104) dazu ausgebildet ist, vollständig geschlossen oder teilweise offen zu sein.

5. Baugruppe nach Anspruch 1, wobei das zumindest ein Verkleidungsbauteil-Befestigungsmodul (106) zumindest eines der folgenden Elemente aufweist: Klammern, Schrauben, Kleben, Schweißen und Kombinationen davon.

6. Baugruppe nach Anspruch 1, wobei das zumindest ein Fahrzeug-Befestigungsmodul (108) Klammern und/oder Kanäle aufweist.

7. Baugruppe nach Anspruch 1, wobei die Tragstruktur (100) aus thermoplastischem Material besteht.

8. Baugruppe nach Anspruch 1, wobei die Tragstruktur (100) aus Faserverbundmaterial besteht.

9. Baugruppe nach Anspruch 1, wobei die Tragstruktur (100) einstückig oder mehrtstückig ausgebildet ist.

10. Baugruppe nach Anspruch 1, wobei die Tragstruktur (100) ferner Erweiterungselemente (114) wie etwa Rippen, Crash-Elemente, Haken, Verriegelungen, Öffnungen und/oder Schraubdome aufweist.

11. Baugruppe nach Anspruch 1, wobei die Tragstruktur (100) ferner ein Luftstromsystem (118), eine untere Versteifung zum Fußgängerschutz, einen Energieabsorber für Hüftstöße, eine RCAR-Barriere und/oder einen Pendelaufprall aufweist.

12. Fahrzeug (300), das eine Baugruppe nach einem der vorstehenden Ansprüche aufweist, wobei das Verkleidungsbauteil (200) von einer Tragstruktur (100) getragen wird.

## Revendications

1. Ensemble comprenant une structure (100) de support et un composant (200) de recouvrement d'un véhicule (300), le composant (200) de recouvrement étant supporté par la structure (100) de support, dans lequel la structure (100) de support comprend :
- un corps (102) fixé à l'arrière du composant (200) de recouvrement du véhicule (300), formant une cavité (104) entre la structure (100) de support et le composant (200) de recouvrement du véhicule (300) ;
- au moins un module (106) de fixation du composant de recouvrement pour fixer la structure (100) de support au composant (200) de recouvrement du véhicule (300) ; et
- au moins un module (108) de fixation de véhicule pour fixer la structure (100) de support au véhicule (300),
- dans lequel la structure (100) de support comprend au moins une partie (110) de montage d'une fixation pour monter au moins une fixation (112) sur la structure (100) de support,
**caractérisé en ce que** la au moins une fixation (112)
- est montée dans la cavité (104) et
- comprend au moins l'un d'un capteur, d'un module d'éclairage, d'un module de blindage électromagnétique, d'une unité de séchage, d'une antenne et de leurs combinaisons,
- dans lequel le composant (200) de revêtement est un écran en une matière plastique,
- dans lequel le composant (200) de revêtement est un pare-choc avant ou un pare-choc arrière du véhicule (300),
- dans lequel la structure (100) de support est conçue et façonnée sous la forme d'une coque de manière à ce que la structure (100) de support forme une cavité (104) avec le composant (200) de revêtement lorsque la structure (100) de support est fixée au composant (200) de revêtement et serve de corps de support entre le composant (200) de revêtement et la carrosserie du véhicule, et
- dans lequel la structure (100) de support a un chemin (116) de ligne de charge, qui est obtenu en ayant un renfort en fibre composite sur la structure (100) de support.

2. Ensemble tel que revendiqué à la revendication 1, dans lequel la au moins une partie (110) de montage de fixation est disposée à l'intérieur de la cavité (104).

3. Ensemble tel que revendiqué à la revendication 1, dans lequel la au moins une partie de montage de fixation (110) est soit partiellement ouverte, soit fermée complètement.

4. Ensemble tel que revendiqué à la revendication 1, dans lequel la cavité (104) est configurée pour être fermée complètement ou ouverte partiellement.

5. Ensemble tel que revendiqué à la revendication 1, dans lequel le au moins un module (106) de fixation d'un composant de revêtement comprend au moins l'un de pinces, de vis, de collage, de soudage et leurs combinaisons.

6. Ensemble tel que revendiqué à la revendication 1, dans lequel, le au moins un module (108) de fixation de véhicule comprend des pinces et/ou des canaux.

7. Ensemble tel que revendiqué à la revendication 1, dans lequel la structure (100) de support est en une matière thermoplastique.

8. Ensemble tel que revendiqué à la revendication 1, dans lequel la structure (100) de support est en un matériau composite de fibre.

9. Ensemble tel que revendiqué à la revendication 1, dans lequel la structure (100) de support est en une seule pièce ou en plusieurs pièces.

10. Ensemble tel que revendiqué à la revendication 1, dans lequel la structure (100) de support comprend en outre des éléments (114) supplémentaires, tels que des nervures, des éléments de collision, des crochets, des serrures, des ouvertures et/ou des bossages pour vis.

11. Ensemble tel que revendiqué à la revendication 1, dans lequel la structure (100) de support comprend en outre un système (118) d'écoulement d'air, un renfort inférieur de protection du piéton, un absorbeur d'énergie pour impact sur le corps humain, une barrière RCAR et/ou un mouton de choc pendulaire.

12. Un véhicule (300) comprenant un ensemble tel que revendiqué à l'une des revendications précédentes, dans lequel le composant (200) de revêtement est supporté par une structure (100) de support.
